# EUROPEAN PATENT SPECIFICATION

(11) **EP 0 761 609 B1**
(45) Date of publication and mention of the grant of the patent: **21.11.2001**
(21) Application number: 96113182.8
(22) Date of filing: 16.08.1996
(51) Int. Cl.: C02F 5/10, C02F 5/12

(54) **Anti-scaling terpolymer agent and method for treating water**
Terpolymer als Inhibierungsmittel von Krustenbildung und Wasserbehandlungsverfahren
Terpolymère agent inhibiteur d'incrustations et méthode de traitement des eaux

(30) Priority: 21.08.1995 JP 23478595; 12.01.1996 JP 2174696
(43) Date of publication of application: 12.03.1997
(73) Proprietor: KURITA WATER INDUSTRIES LTD., Shinjuku-ku Tokyo (JP); JAPAN SYNTHETIC RUBBER CO., LTD., Tokyo 104 (JP)
(72) Inventor: Suzuki, Takashi, c/o Kurita Water Ind. Ltd., Shinjuku-ku, Tokyo (JP); Morinaga, Hideo, c/o Kurita Water Ind. Ltd., Shinjuku-ku, Tokyo (JP); Ishikawa, Katsuhiro, Japan Synthetic Rubber Co Ltd, Chuou-ku, Tokyo (JP); Hirano, Akihide, c/o Kurita Water Ind. Ltd., Shinjuku-ku, Tokyo (JP)
(74) Representative: Goddar, Heinz J., Dr.

(56) References cited:
- EP-A- 0 337 738
- EP-A- 0 577 016
- CHEMICAL ABSTRACTS, vol. 116, no. 26, 29 June 1992 Columbus, Ohio, US; abstract no. 256737p, "Manufacture of sulfo group containing copolymers as scale inhibitors and dispersants" page 49; column 2; XP002016484 & PATENT ABSTRACTS OF JAPAN vol. 16, no. 194 (C-938), 11 May 1992 & DATABASE WPI Section Ch, Week 9211 Derwent Publications Ltd., London, GB; Class A18, AN 92-085281 & JP-A-04 028 708 (JAPAN SYNTHETIC RUBBER) 31 January 1992

## Description

### FIELD OF THE INVENTION

The present invention relates to a novel water treating agent and a method for treating water therewith.

More precisely, the present invention relates to a novel water treating agent which is used in boilers, cooling water systems, hot water systems and dust collecting water plants for preventing them from being disordered by heat transfer failure, flow rate depression and local corrosion to be caused by adhesion or deposition of scale, sludge and slime onto heating pipes, heat exchangers, condensers, reactors for polymerization and various pipe lines in them also relates to a method of using the agent for treating water in them.

### BACKGROUND OF THE INVENTION

Heretofore, poly phosphates and carboxylic acid polymers have been used in a scale inhibiting and fouling preventing agent to be used in boilers, cooling water systems, dust collecting water plants and water supply piping systems for the purpose of preventing the adhesion of scale onto the surfaces of the metal parts to be kept in contact with water, preventing the deposition of sludge onto them and preventing the local corrosion to occur in the area under the fouled parts.

However, poly phosphates are defective in that they are easily hydrolyzed to give orthophosphates, which precipitate as calcium phosphate in water systems having high pH and high calcium hardness at high temperatures to often accelerate scale troubles in them. In addition, since waste waters containing phosphorus are problematic as causing eutrophication in closed water areas such as lakes, marshes and island seas, the use of phosphorus containing chemicals must be limited.

On the other hand, carboxylic acid polymers form insoluble salts in water containing high concentrations of poly valent metal ions and the salts precipitate therein, with the result that the polymers are not effective in such water. In particular, where the polymers are applied to water having a high calcium ion concentration, the water becomes cloudy due to the calcium salts formed and precipitated therein.

In Japanese Laid Open Patent Application No. 2-9496, proposed is a phosphorus free water treating agent for scale inhibition, which comprises a copolymer of a conjugated dienesulfonic acid and (meth)acrylic acid and which is said to be effective even in systems having high metal ion concentrations without being precipitated therein. Comparing this with sodium polyacrylate which has heretofore been used in conventional water treating agents, the former is superior to the latter but is not satisfactorily good. Therefore, it is desired to obtain a water treating agent having much improved scale retarding and fouling preventing effects.

CHEMICAL ABSTRACTS, vol. 166, no. 26, 29 June 1992, abstract no. 256737p, page 49, column 2 - page 50, column 1 and JP-A-04 028 708 disclose a copolymer which can be produced by copolymerising a conjugated dienesulfonate, a carboxyl-containing compound and a hydroxyl-containing compound. The sulfogroup containing copolymer may be used for the treatment of water.

EP-A-0 337 738 discloses a sulfonation product of conjugated diene. The particular sulfonation product may be used as a water-treating agent.

### OBJECTS AND SUMMARY OF THE INVENTION

The object of the present invention is to provide a phosphorus free water treating agent which does not react with poly valent ions to form insoluble salts and which has an excellent and long lasting, scale inhibiting and fouling preventing effect, and also a method for treating water therewith. In addition, the object of the present invention is to provide a water treating agent having an excellent metal corrosion preventing effect, and also a method for treating water therewith.

We, the present inventors, have assiduously studied so as to attain the above mentioned objects and, as a result, have found that a ternary copolymer comprising conjugated dienesulfonic acid units, (meth)acrylic acid units and 2-hydroxyethyl (meth)acrylate units or (meth)acrylamido-2-methylalkanesulfonic acid unit exhibits an excellent scale inhibit and fouling preventing effect. On the basis of this finding, we have completed the present invention.

Specifically, the first aspect of the present invention is to provide a water treating agent comprising a ternary copolymer which is synthesized from a conjugated dienesulfonic acid and/or its salt of the following general formula [1]: 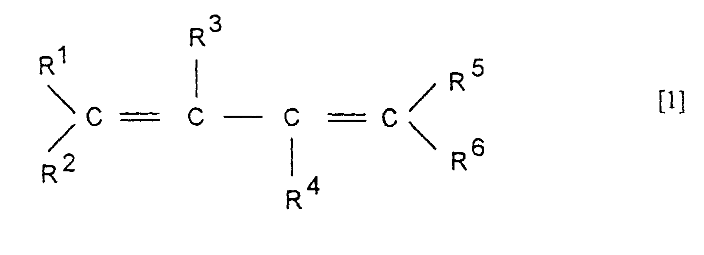 wherein R¹, R², R³, R⁴, R⁵ and R⁶ each represent a hydrogen atom, a methyl group or -SO₃X¹, provided that one or more of R¹ to R⁶ are methyl groups, one or more of the remaining R¹ to R⁶ are groups of -SO₃X¹, and X¹ represents a hydrogen atom, a monovalent metal, or an ammonium group unsubstituted or mono substituted by an organic group: and a (meth)acrylic acid and/or its salts of the following general formula [2]: 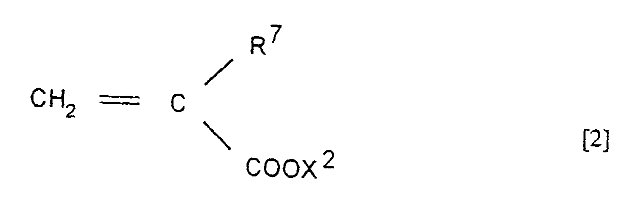 wherein R⁷ represents a hydrogen atom or a methyl group; and X² represents a hydrogen atom, a monovalent metal, or an ammonium group unsubstituted or mono-substituted by an organic group;
and further a (meth)acrylamido-2-methylalkanesulfonic acid and/or its salt of the following general formula [4]: 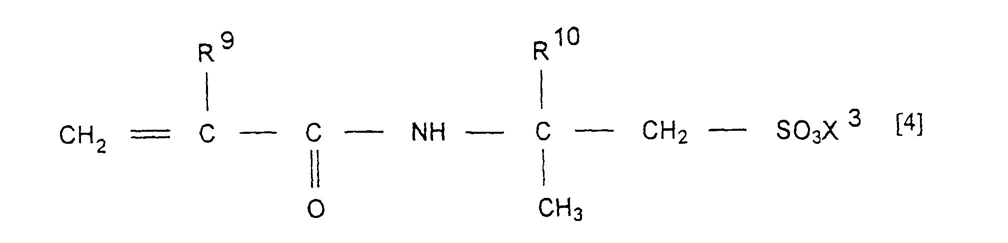 wherein R⁹ and R¹⁰ each represent a hydrogen atom or a methyl group; and X³ represents a hydrogen atom, a monovalent metal, or an ammonium group unsubstituted or mono-substituted by an organic group.

As one embodiment of the first aspect of the invention, the ternary copolymer to be in the water treating agent comprises from 5 to 50 mol% of the unit derived from the conjugated dienesulfonic acid and/or its salt, from 40 to 90 mol% of the unit derived from the (meth)acrylic acid and/or its salt, and from 1 to 20 mol% of the unit derived from the (meth)acrylamido-2-methylalkanesulfonic acid and/or its salt.

As still another embodiment of the first aspect of the invention, the ternary copolymer to be in the water treating agent has a weight average molecular weight of from 500 to 300,000.

As still another embodiment of the first aspect of the invention, the water treating agent further comprises a metal corrosion inhibitor.

As still another embodiment of the first aspect of the invention, the metal corrosion inhibitor to be optionally in the water treating agent comprises at least one selected from the group consisting of polyvalent metal salts, phosphonates, azoles, phosphates, phosphocarboxylates, amines and phosphoric esters.

The second aspect of the present invention is to provide a method for treating water, comprising adding to water systems a water treating agent that comprises a ternary copolymer as synthesized from a conjugated dienesulfonic acid and/or its salt of the following general formula [1]: 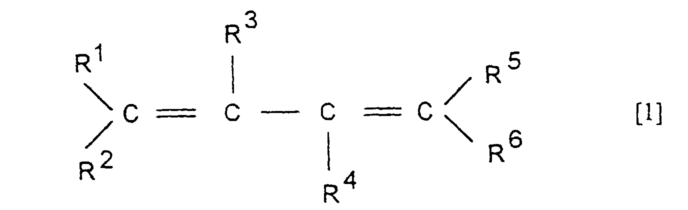 wherein R¹, R², R³, R⁴, R⁵ and R⁶ each represent a hydrogen atom, a methyl group or -SO₃X¹, provided that one or more of R¹ to R⁶ are methyl groups, one or more of the remaining R¹ to R⁶ are groups of -SO₃X¹, and X¹ represents a hydrogen atom, a monovalent metal, or an ammonium group unsubstituted or mono substituted by an organic group;
and a (meth)acrylic acid and/or its salts of the following general formula [2]: 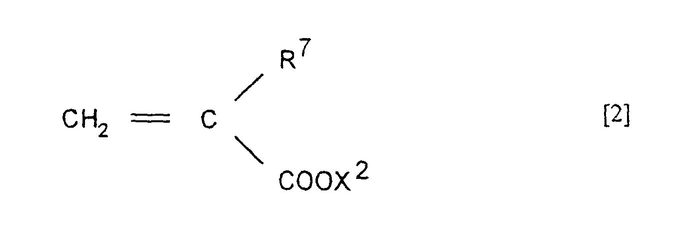 wherein R⁷ represents a hydrogen atom or a methyl group; and X² represents a hydrogen atom, a monovalent metal, or an ammonium group unsubstituted or mono substituted by an organic group;
and further a (meth)acrylamido-2-methylalkanesulfonic acid and/or its salt of the following general formula [4]: 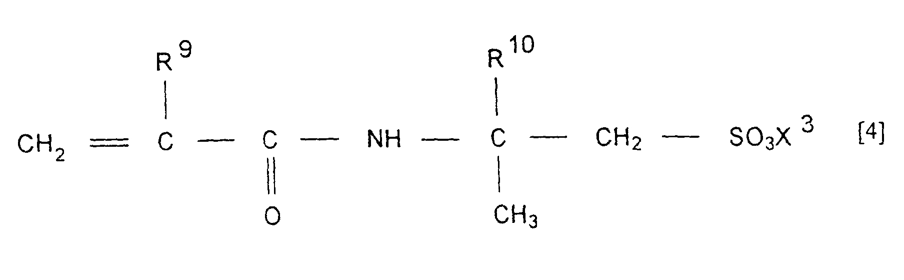 wherein R⁹ and R¹⁰ each represent a hydrogen atom or a methyl group; and X³ represents a hydrogen atom, a monovalent metal, or an ammonium group unsubstituted or mono substituted by an organic group, in an amount of from 0.1 to 1000 mg/liter.

As one embodiment of the second aspect of the invention, the ternary copolymer to be in the water treating agent comprises from 5 to 50 mol% of the unit derived from the conjugated dienesulfonic acid and/or its salt, from 40 to 90 mol% of the unit derived from the (meth)acrylic acid and/or its salt, and from 1 to 20 mol% of the unit derived from the (meth)acrylamido-2-methylalkanesulfonic acid and/or its salt.

As still another embodiment of the second aspect of the invention, the ternary copolymer to be in the water treating agent has a weight-average molecular weight of from 500 to 300,000.

As still another embodiment of the second aspect of the invention, the water treating agent further comprises a metal corrosion inhibitor in addition to the ternary copolymer.

As still another embodiment of the second aspect of the invention, the metal corrosion inhibitor to be optionally in the water treating agent comprises at least one selected from the group consisting of polyvalent metal salts, phosphonates, azoles, phosphates, phosphocarboxylates, amines and phosphoric esters.

### BRIEF DESCRIPTION OF THE DRAWING

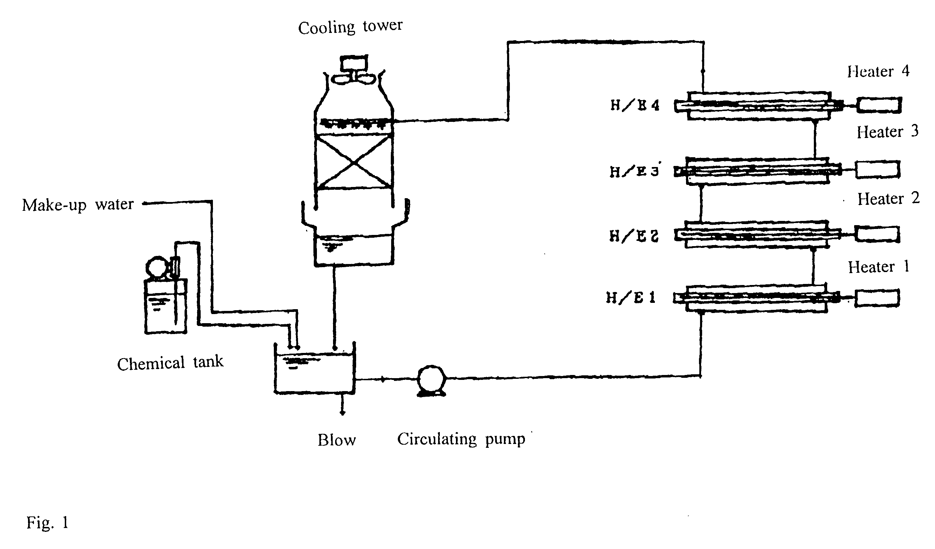

Fig. 1 is a flow diagram of the pilot plant of a water-cooling system as used here in Examples 19 to 21 and Comparative Examples 41 to 42.

### DETAILED DESCRIPTION OF THE INVENTION

The water treating agent of the present invention comprises a copolymer which is synthesized from a conjugated dienesulfonic acid and/or its salts of the following general formula [1], a (meth)acrylic acid and/or its salts of the following general formula [2], and a (meth)acrylamido-2-methylalkanesulfonic acid and/or its salt of the following general formula [4]:

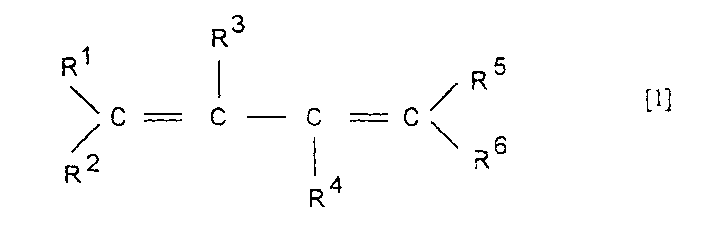

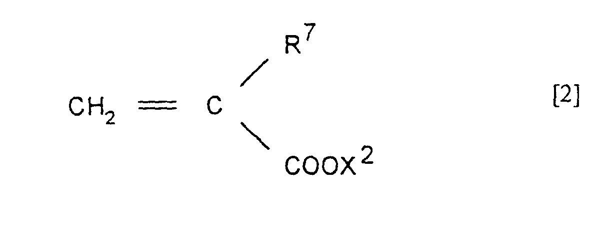

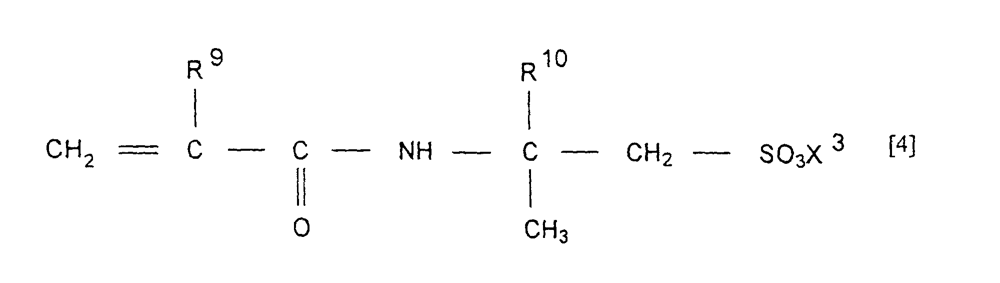

In formula [1]. R¹, R², R³, R⁴, R⁵ and R⁶ each represent a hydrogen atom, a methyl group or -SO₃X¹, provided that one or more of R¹ to R⁶ are methyl groups, one or more of the remaining R¹ to R⁶ are groups of -SO₃X¹, and X¹ represents a hydrogen atom, a monovalent metal, or an ammonium group unsubstituted or mono substituted by an organic group. In formula [2], R⁷ represents a hydrogen atom or a methyl group; and X² represents a hydrogen atom, a monovalent metal, or an ammonium group unsubstituted or mono substituted by an organic group. In formula [4], R⁹ and R¹⁰ each represent a hydrogen atom or a methyl group; and X³ represents a hydrogen atom, a monovalent metal, or an ammonium group unsubstituted or mono-substituted by an organic group. The ammonium group as mono substituted by an organic group is an ammonium group to be formed through the reaction of -SO₃H or -COOH with a primary amine. The primary amine that can give such an ammonium group as mono substituted by an organic group includes, for example, methylamine, ethylamine, propylamine, isopropylamine, butylamine, isobutylamine, sec butylamine, tert butylamine, pentylamine, hexylamine, cyclohexylamine, benzylamine, and monoethanolamine.

In the water treating agent of the present invention which has the ability to inhibit scaling and to prevent fouling in water plants, X¹ and X² each are preferably an alkali metal, more preferably sodium.

The conjugated dienesulfonic acid of formula [1] includes, for example, 2-methyl-1,3-butadiene-1-sulfonic acid, 2-methyl-1,3-butadiene-3-sulfonic acid, 2-methyl-1,3-butadiene-4-sulfonic acid, 1,3-pentadiene-1-sulfonic acid, 1,3-pentadiene-2-sulfonic acid, 1,3-pentadiene-3-sulfonic acid, 1,3-pentadiene-4-sulfonic acid, 2,3-dimethylbutadiene-1-sulfonic acid, 2-methyl-1,3-pentadiene-4-sulfonic acid, 3-methyl-1,3-pentadiene-1-sulfonic acid, 2-methyl-1,3-butadiene-1,3-disulfonic acid, and 2-methyl-1,3-butadiene-1,4-disulfonic acid.

The (meth)acrylic acid of formula [2] includes acrylic acid and methacrylic acid. Acrylic acid is preferably used in the water treating agent of the present invention.

The method of copolymerizing the conjugated dienesulfonic acid and/or its salt of formula [1], the (meth)acrylic acid and/or its salt of formula [2], and the (meth)acrylamido-2-methylalkanesulfonic acid and/or its salt of formula [4] to obtain the ternary copolymer for use in the present invention is not specifically defined but may be any conventional one. The monomer of formula [1], the monomer of formula [2] and the monomer of formula [4] are all soluble in water, and the ternary copolymer to be obtained through copolymerization of these monomers is also soluble in water. Therefore, solution polymerization using water as the medium is preferably employed to copolymerize these monomers. One example of solution polymerization using water as the medium, which is employable in the present invention, is such that the pre-determined monomers are dissolved in water, then the atmosphere around the resulting system is substituted with nitrogen, a water soluble, radical polymerization initiator is added thereto, and the system is heated.

The radical polymerization initiator includes, for example, hydrogen peroxide, sodium persulfate, potassium persulfate, ammonium persulfate, 2,2'-azobis(2-amidinopropane) dihydrochloride, and t butyl hydroperoxide. The polymerization initiator can be added successively or all at a time.

The amount of the polymerization initiator to be added may be generally from 0.01 to 5 parts by weight, preferably from 0.1 to 3 parts by weight, relative to 100 parts by weight of the monomers in total. If it is less than 0.01 parts by weight, the polymerization of the monomers could not be conducted efficiently, but if it is more than 5 parts by weight, the cost of the catalyst uneconomically increases too much.

To promote the radical polymerization, a reducing agent, such as sodium pyrobisulfite, ferrous sulfate, copper sulfate, triethanolamine, glucose, formaldehyde sodium sulfoxylate, L-ascorbic acid or its salt or sodium hydrogensulfite, and also a chelating agent, such as glycine, alanine or sodium ethylenediaminetetraacetate, can be added to the polymerization system.

A chain transfer agent can be used as the agent for controlling the molecular weight of the copolymer to be produced. The chain transfer agent includes, for example, mercaptans such as t dodecylmercaptan, n tetradecylmercaptan, octylmercaptan, t hexylmercaptan and n hexylmercaptan, halides such as ethylene bromide, hydrocarbons such as 9,10-dihydroanthracene, 1,4-cyclohexadiene and 1,4-dihydroanthracene, heterocyclic compounds such as 2,5-dihydrofuran, as well as α-methylstyrene dimers, and xanthogen disulfides. In general, the chain transfer agent can be added in an amount of less than 10 parts by weight relative to 100 parts by weight of the monomers in total.

The polymerization temperature may be from -50 to +200°C, preferably from +50 to +150°C. The polymerization time may be from 0.1 to 30 hours, within which the radical polymerization shall be conducted.

It is desirable to successively add the monomers to the polymerization reactor. In order to produce a uniform composition of the monomers added and to remove the polymerization heat from the reactor, the time for the addition of the monomers shall be from 0.5 to 5 hours, preferably from 1 to 3 hours.

It is desirable that the copolymer to be in the water treating agent of the present invention which has the ability to inhibit scaling and to prevent fouling in water plants comprises from 5 to 50 mol% of the unit derived from the conjugated dienesulfonic acid and/or its salt, from 40 to 90 mol% of the unit derived from the (meth)acrylic acid and/or its salt, and from 1 to 20 mol% of the unit derived from the (meth)acrylamido-2-methylalkanesulfonic acid and/or its salt. More preferably, the copolymer comprises from 10 to 30 mol% of the unit derived from the conjugated dienesulfonic acid and/or its salt, from 60 to 90 mol% of the unit derived from the (meth)acrylic acid and/or its salt, and from 2 to 15 mol% of the unit derived from the (meth)acrylamido-2-methylalkanesulfonic acid and/or its salt.

If the content of the unit derived from the conjugated dienesulfonic acid and/or its salt in the copolymer, which is in the water treating agent of the present invention having the ability to inhibit scaling and to prevent fouling in water systems, is less than 5 mol% or more than 50 mol%, the scale inhibiting and fouling preventing effect of the water treating agent will be lowered. If the content of the unit derived from the (meth)acrylic acid and/or its salt in the copolymer is less than 40 mol% or more than 90 mol%, the scale inhibiting and fouling preventing effect of the water treating agent will be also lowered. If the content of the unit derived from the (meth)acrylamido-2-methylalkanesulfonic acid and/or its salt is less than 1 mol% or more than 20 mol%, the scale inhibiting and fouling preventing effect of the water treating agent will be also lowered.

The copolymer to be in the water treating agent of the present invention which has the ability to inhibit scaling and to prevent fouling in water system may comprise any other monomer units, in addition to the unit derived from the conjugated dienesulfonic acid and/or its salt of formula [1], the unit derived from the (meth)acrylic acid and/or its salt of formula [2], and the unit derived from the (meth)acrylamido-2-methylalkanesulfonic acid and/or its salt of formula [4]. The copolymer of this type comprising such additional monomer units can be obtained by copolymerizing the monomer of formula [1], the monomer of formula [2], the monomer of formula [4], and a monomer copolymerizable with these monomers, according to any known methods. The monomer copolymerizable with the monomer of formula [1], the monomer of formula [2] and the monomer of formula [4] includes, for example, 3-allyloxy-2 -hydroxypropanesulfonic acid, vinylsulfonic acid, acid phosphoxyethyl methacrylate, acid phosphoxyethyl acrylate, acid phosphoxy polyoxyethylene glycol monomethacrylate, (meth)acrylamide, (meth)acrylonitrile, methyl (meth)acrylate, glycidyl (meth)acrylate, N methylol(meth)acrylamide, maleic acid, maleic anhydride, styrene, α-methylstyrene, vinyltoluene, p-methylstyrene, and vinyl acetate.

It is desirable that the copolymer to be in the water treating agent of the present invention having the ability to inhibit scaling and to prevent fouling in water systems has a weight average molecular weight of from 500 to 300,000, more preferably from 5,000 to 50,000. If the copolymer in the water treating agent has a weight average molecular weight of less than 500, the scale inhibiting and fouling preventing effect of the agent will be lowered. If the copolymer has a weight average molecular weight of more than 300,000. the viscosity of the water treating agent comprising it will be too high so that the agent will be not easy to handle.

To use the water treating agent of the present invention, its amount to be added to water systems shall be suitably selected, depending on the quality of water to be treated therewith, which includes its pH, hardness and alkalinity, the temperature of water and also the heat-transferring conditions in the system. In general, the amount of the water treating agent to be added shall be from 0.1 to 1,000 mg/liter, in terms of the solid content of the copolymer in the agent. In most cases, the amount may be from 1 to 100 mg/liter, in terms of the solid content of the copolymer in the agent, in order to make the agent exhibit a satisfactory scale inhibiting and fouling preventing effect.

The water treating agent of the present invention is used in boiler systems, cooling water systems, industrial water supply plants, dust collecting water plants, drainage systems and slug cooling systems in the iron industry, and ash cooling systems in garbage incinerators, for preventing them from being disordered by heat transfer failure and flow rate depression to be caused by adhesion or deposition of scale, sludge and slime onto the surfaces of metal parts in them and by local corrosion to occur in the area under the fouled parts. The method of adding to such water systems the water treating agent of the present invention having the ability to inhibit scaling and to prevent fouling in them is not specifically defined. The agent can be added thereto all at a time or either intermittently or continuously.

The water treating agent can be used singly by itself but is preferably used along with a metal corrosion inhibitor to synergistically exhibit the metal corrosion inhibiting effect.

The metal corrosion inhibitor includes polyvalent metal salts such as zinc salts, nickel salts, molybdates and tungstates; phosphonates; azoles such as triazoles; phosphates such as orthophosphates and polyphosphates; phosphonocarboxylates; amines and phosphoric esters.

The metal corrosion inhibitor, if used, can be added to the copolymer having the ability to inhibit scaling and to inhibit fouling in water systems, in an amount of from 0.1 to 10 parts by weight relative to one part of the copolymer. To combine the inhibitor and the copolymer, predetermined amounts of these can be previously mixed to give one formulation which shall be added to water systems, or alternatively, the two can be separately added to water systems in such a manner that predetermined amounts of the two shall exist therein.

The water treating agent of the present invention may further contain any other known water treating agents. Known water treating agents include known scale inhibiting and fouling preventing chemicals, microbicides (slime retarding agents), acids and alkalis. The known scale inhibiting chemicals include, for example, polyacrylates, polyacrylamides and their partial hydrolysis products, maleic acid polymers, itaconic acid polymers, and binary acrylic copolymers comprising 2-hydroxyethyl methacrylate and hydroxyallyloxypropanesulfonic acid.

The microbicides (slime controlling agents) include, for example, chlorine compounds such as chlorine gas, sodium and potassium hypochlorite, and sodium chloroisocyanurate; inorganic and organic, bromine containing agents; organic nitrogen sulfur compounds; and quaternary ammonium salts.

Next, the present invention is described in more detail with reference to the following production examples and examples, which, however, are not intended to restrict the scope of the present invention.

### EXAMPLES

### Production Example 1.

252.1 g of isoprenesulfonic acid (commercially-available product with an acid content of 40 % by weight), 200.3 g of acrylic acid (commercially available product with an acid content of 80 % by weight) and 31.4 g of acrylamido-2-methylpropanesulfonic acid (commercially available product with an acid content of 98 % by weight) were mixed to prepare an aqueous solution comprising the monomers. The molar ratio of isoprenesulfonic acid/acrylic acid/acrylamido-2-methylpropanesulfonic acid in the aqueous solution was 20/75/5.

228.7 g of water and 13.7 g of 30 wt.%-hydrogen peroxide aqueous solution were put into a one liter, four neck separable flask equipped with a stirrer, a reflux condenser, a dropping runnel and a nitrogen gas-introducing tube, and the aqueous monomer solution that had been prepared in the above was dropwise added thereto over a period of 2 hours while keeping the inner temperature of the flask at 100°C. After the addition, the polymerization was conducted for further one hour, and then 67.3 g of an 48 wt.%-sodium hydroxide aqueous solution was added to the reaction mixture to partially neutralize it. Thus was obtained a copolymer having a number average molecular weight of 22,000. The copolymer was used in Example 2.

In the same manner as above but varying the compositional ratio of the monomers to be reacted and varying the amount of hydrogen peroxide to be added, various copolymers having different monomer compositions were obtained as shown in Tables 1 to 4.

### Example 1:

### Test for Gelling of Scale inhibiting and fouling preventing Agent with Calcium Ion:

Demineralized water, a pH buffering solution comprising boric acid and sodium borate, a solution of sodium salt of isoprenesulfonic acid/acrylic acid/acrylamido-2-methylpropanesulfonic acid (20/75/5, by mol%) copolymer having a weight average molecular weight of 15,000 (this is a scale inhibiting and foulig-preventing agent), and a solution of calcium chloride were put into a 500-ml conical beaker in that order, to prepare 500 ml of a test liquid having a pH of 8.5, a solid content of the scale inhibiting and fouling preventing agent of 100 mg/liter, and a calcium hardness, in terms of CaCO₃ content, of 50 mg/liter.

While varying the amount of the calcium chloride solution added, the same process as above was repeated to prepare various test liquids of 500 ml each, having a calcium hardness, in terms of CaCO₃ content, of 100, 200, 300, 400, 500, 600, 700, 800, 900, 1,000, 1,100 or 1,200 mg/liter.

The conical beakers each were sealed with a polyethylene film, and left in a water bath filled with water having a controlled temperature of 90°C, for 1 hour. After this, the degree of turbidity of each test liquid, which shall result from the gel to be formed therein through bonding of calcium ions to the copolymer of the scale inhibiting and fouling preventing agent, was measured. The test liquids comprising (A1) and having a calcium concentration, in terms of CaCO₃, of 900 mg/liter or less did not become turbid, while those comprising (A1) and having a calcium concentration, in terms of CaCO₃, of 1000 mg/liter or more became turbid. The minimum calcium hardness (calcium concentration) that shall make the test liquid cloudy (turbid) was defined to be the anti gelling concentration for the copolymer tested. According to this definition, the anti gelling concentration for the copolymer of the scale inhibiting and fouling preventing agent (A1) tested herein was 1000 mg of CaCO₃/liter.

On the other hand, the test liquids comprising (B1) and having a calcium concentration, in terms of CaCO₃, of 500 mg/liter or less did not become turbid, while those comprising (B1) and having a calcium concentration, in terms of CaCO₃, of 600 mg/liter or more became turbid. The anti gelling concentration for the copolymer of the scale inhibiting and fouling preventing agent (B1) tested herein was 600 mg of CaCO₃/liter.

### Example 2:

The same experiment as in Example 1 was repeated, except that a solution of sodium salt of isoprenesulfonic acid/acrylic acid/acrylamido-2-methylpropanesulfonic acid (20/75/5, by mol%) copolymer having a weight average molecular weight of 22.000 was used as the scale retarding and soil preventing agent. The anti gelling concentration for the scale inhibiting and fouling preventing agent tested herein was 600 mg of CaCO₃/liter.

### Comparative Example 1 :

The same experiment as in Example 1 was repeated, except that a solution of sodium salt of isoprenesulfonic acid/acrylic acid (25/75, by mol%) copolymer having a weight average molecular weight of 10,000 was used as the scale inhibiting and fouling preventing agent. The anti gelling concentration for the scale inhibiting and fouling preventing agent tested herein was 400 mg of CaCO₃/liter.

### Comparative Example 2:

The same experiment as in Example 1 was repeated, except that a solution of sodium salt of isoprenesulfonic acid/acrylic acid (25/75, by mol%) copolymer having a weight average molecular weight of 15,000 was used as the scale inhibiting and fouling preventing agent. The anti gelling concentration for the scale inhibiting and fouling preventing agent tested herein was 400 mg of CaCO₃/liter.

### Comparative Example 3:

The same experiment as in Example 1 was repeated, except that a solution of sodium polyacrylate having a weight average molecular weight of 5,000 was used as the scale inhibiting and fouling preventing agent. The anti gelling concentration for the scale inhibiting and fouling preventing agent tested herein was 100 mg of CaCO₃/liter.

The results of Examples 1 and 2 and Comparative Examples 1 to 3 are shown in Table 1.

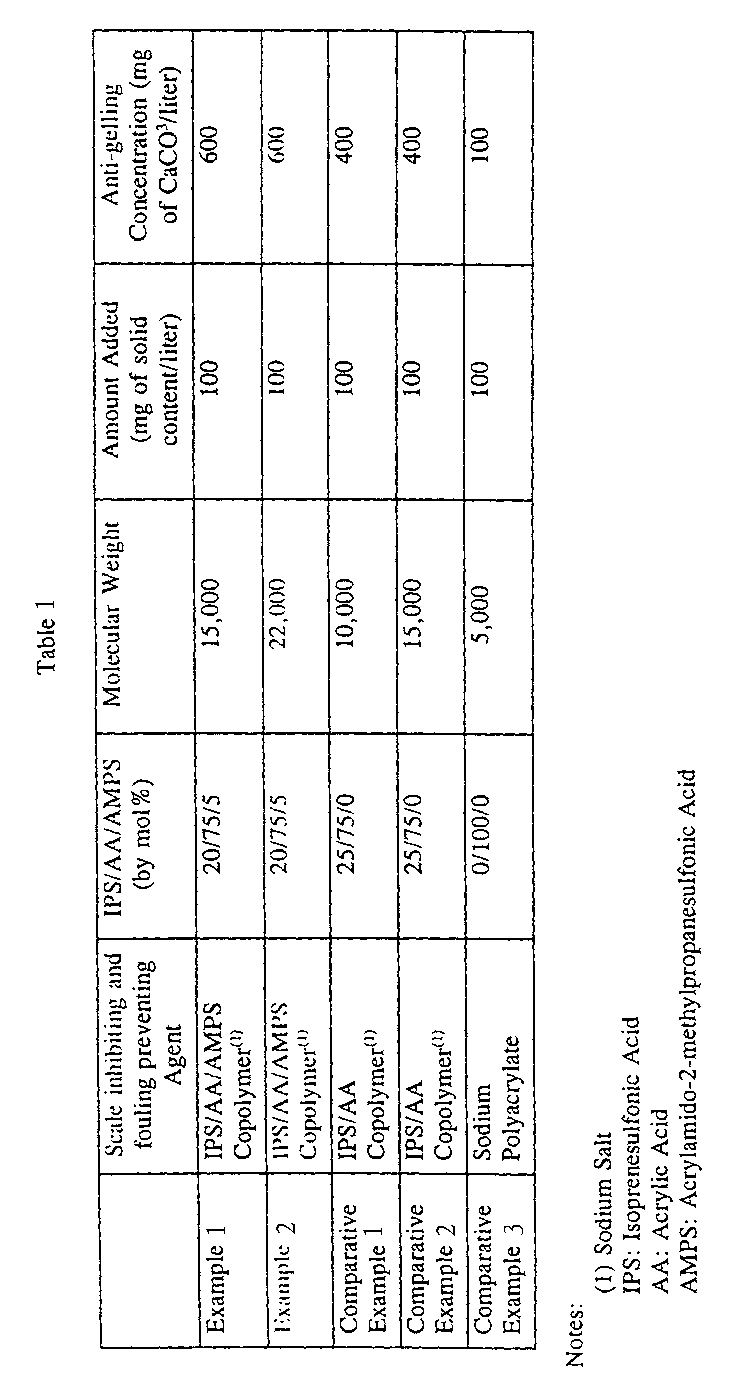

The scale inhibiting and fouling preventing agent, for which the anti gelling concentration is higher, can be dissolved more stably in water having a high calcium hardness while exhibiting a more stable scale inhibiting and fouling preventing effect. It is known from the results of the above mentioned examples and comparative examples that the scale inhibiting and fouling preventing agents of the present invention, each comprising an isoprenesulfonic acid/acrylic acid/acrylamido-2-methylpropanesulfonic acid copolymer, exhibit a higher anti gelling ability and therefore can be dissolved more stably in water having a high calcium hardness than the comparative agent comprising a sodium polyacrylate and even than the other comparative agents each comprising an isoprenesulfonic acid/acrylic acid copolymer, the comparative agents being referred to herein as samples of prior art products.

### Example 3:

### Test for Preventing Precipitation of Calcium Phosphate:

Demineralized water, a pH buffering solution comprising boric acid and sodium borate, a solution of calcium chloride, a solution of sodium salt of isoprenesulfonic acid/acrylic acid/acrylamido-2-methylpropanesulfonic acid (20/75/5, by mol%) copolymer having a weight average molecular weight of 15,000 (this is a scale inhibiting and fouling preventing agent), and a solution of sodium phosphate were put into a 500-ml conical beaker in that order, to prepare 500 ml of a test liquid having a pH of 8.6, a solid content of the scale inhibiting and fouling-preventing agent of 8 mg/liter, a calcium hardness, in terms of CaCO₃ content, of 100 mg/liter, and a phosphate ion concentration, in terms of PO₄³⁻, of 10 mg/liter.

The conical beaker was sealed with a polyethylene film, and left in a water bath filled with water having a controlled temperature of 60°C. After 40 hours, the test liquid was taken out and filtered through a filter paper having a pore diameter of 0.1 *µ*m, and the phosphate ion concentration remained in the resulting filtrate was measured to be 9.4 mg PO₄³⁻/liter.

### Example 4:

The same experiment as in Example 3 was repeated, using the same scale inhibiting and fouling preventing agent as that used in Example 3, except that the concentration of the agent was varied to 6 mg, in terms of the solid content, per liter. The phosphate ion concentration remained in the filtrate was 2.4 mg PO₄³⁻/liter.

### Example 5:

The same experiment as in Example 3 was repeated, except that a solution of sodium salt of isoprenesulfonic acid/acrylic acid/acrylamido-2-methylpropanesulfonic acid (20/75/5, by mol%) copolymer having a weight average molecular weight of 22,000 was used as the scale inhibiting and fouling preventing agent and that the concentration of the agent was 8 mg, in terms of the solid content, per liter. The phosphate ion concentration remained in the filtrate was 9.2 mg PO₄³⁻/liter.

### Example 6:

The same experiment as in Example 3 was repeated, except that the same scale inhibiting and fouling preventing agent as that used in Example 5 was used and that the concentration of the agent was varied to 6 mg, in terms of the solid content, per liter. The phosphate ion concentration remained in the filtrate was 1.6 mg PO₄³⁻/liter.

### Comparative Example 4:

The same experiment as in Example 3 was repeated, except that a solution of sodium salt of isoprenesulfonic acid/acrylic acid (25/75, by mol%) copolymer having a weight average molecular weight of 15,000 was used as the scale inhibiting and the fouling preventing agent and that the concentration of the agent was 12 mg, in terms of the solid content, per liter. The phosphate ion concentration remained in the filtrate was 9.2 mg PO₄³⁻/liter.

### Comparative Example 5:

The same experiment as in Example 3 was repeated, except that the same scale inhibiting and fouling preventing agent as that used in Comparative Example 4 was used and that the concentration of the agent was varied to 10 mg, in terms of the solid content, per liter. The phosphate ion concentration remained in the filtrate was 6.3 mg PO₄³⁻/liter.

### Comparative Example 6:

The same experiment as in Example 3 was repeated, except that the same scale inhibiting and fouling preventing agent as that used in Comparative Example 4 was used and that the concentration of the agent was varied to 8 mg, in terms of the solid content, per liter. The phosphate ion concentration remained in the filtrate was 3.2 mg PO₄³⁻/liter.

### Comparative Example 7:

The same experiment as in Example 3 was repeated, except that a solution of sodium polyacrylate having a weight-average molecular weight of 5,000 was used as the scale inhibiting and fouling preventing agent and that the concentration of the agent was 12 mg, in terms of the solid content, per liter. The phosphate ion concentration remained in the filtrate was 2.5 mg PO₄³⁻/liter.

### Comparative Example 8:

The same experiment as in Example 3 was repeated, except that the same scale inhibiting and fouling preventing agent as that used in Comparative Example 7 was used and that the concentration of the agent was varied to 8 mg, in terms of the solid content, per liter. The phosphate ion concentration remained in the filtrate was 1.0 mg PO₄³⁻/liter.

### Comparative Example 9:

The same experiment as in Example 3 was repeated, except that no scale inhibiting and fouling preventing agent was added. The phosphate ion concentration remained in the filtrate was 0.3 mg PO₄³⁻/liter.

The results of Examples 3 to 6 and Comparative Examples 4 to 9 are shown in Table 2.

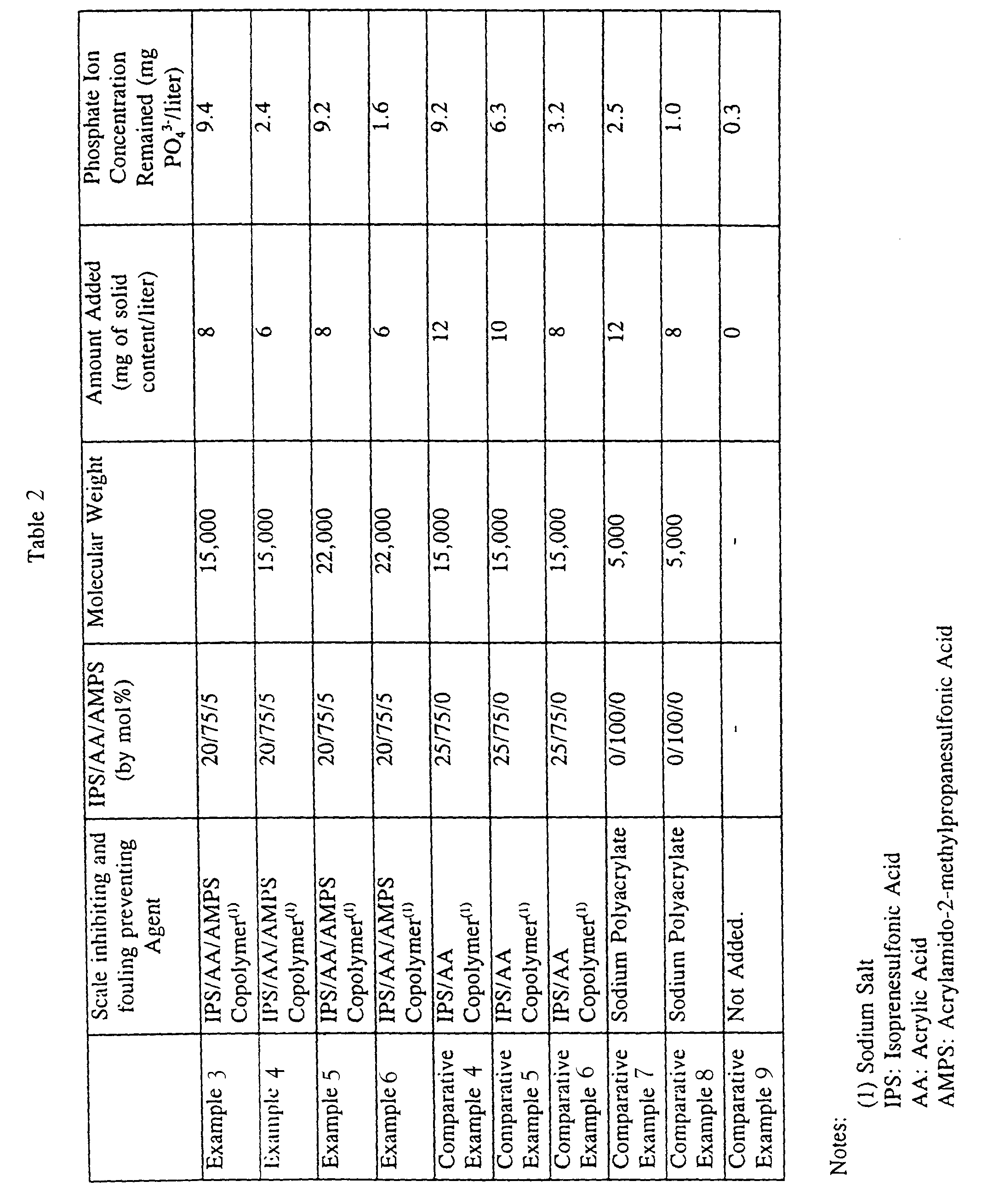

If the effect of the scale inhibiting and fouling preventing agent tested against the precipitation of calcium phosphate is larger, the test liquid to which the agent was added shall produce a smaller amount of the precipitate of calcium phosphate therein and therefore the phosphate ion content of the filtrate from the test liquid containing the agent shall be near to the original phosphate ion content of the test liquid which is 10 mg PO₄³⁻/liter. However, if the effect of the scale inhibiting and fouling preventing agent tested against the precipitation of calcium phosphate is smaller, the test liquid to which the agent was added shall produce a larger amount of the precipitate of calcium phosphate therein. Since the precipitate is removed through the filtration of the test liquid containing the agent, the filtrate shall have a smaller phosphate ion content.

From the results in Table 2, it is known that, when the scale inhibiting and fouling preventing agent of the present invention comprising an isoprenesulfonic acid/acrylic acid/acrylamido-2-methylpropanesulfonic acid copolymer was added to the test liquid in an amount of 8 mg, in terms of the solid content of the agent, per liter of the test liquid, the phosphate ion concentration in the filtrate was larger than 9 mg PO₄³⁻/liter. This verifies the excellent effect of the agent against the precipitation of calcium phosphate in the test liquid or, that is, against the formation of scale. As opposed to this, when the comparative agent comprising an isoprenesulfonic acid/acrylic acid copolymer was added to the same test liquid in an amount of 8 mg, in terms of the solid content of the agent, per liter of the test liquid, the phosphate ion concentration in the filtrate was only 3.2 mg PO₄³⁻/liter. Thus, there is a significant difference between the scale inhibiting and fouling preventing agent of the present invention and the comparative agent in the ability to prevent the precipitation of calcium phosphate. Only when the comparative agent was added in an amount of 12 mg, in terms of the solid content of the agent, per liter of the test liquid, the phosphate ion concentration in the filtrate was larger than 9 mg PO₄³⁻/liter. Regarding the other comparative agent comprising a sodium polyacrylate, even when it was added to the same test liquid in an amount of 12 mg, in terms of the solid content of the agent, per liter of the test liquid, the phosphate ion concentration in the filtrate was only 2.5 mg PO₄³⁻/liter.

### Example 7:

### Test for Preventing Precipitation of Zinc Phosphate:

Demineralized water, a solution of calcium chloride, a solution of sodium salt of isoprenesulfonic acid/acrylic acid/acrylamido-2-methylpropanesulfonic acid (20/75/5, by mol%) copolymer having a weight average molecular weight of 22,000 (this is a scale inhibiting and fouling preventing agent), a solution of zinc chloride and a solution of sodium hydrogencarbonate were put into a 500-ml conical beaker in that order. Last, an aqueous solution of 1 wt.%-sodium hydroxide was added thereto to adjust the pH of the resulting mixture. Thus was prepared 500 ml of a test liquid having a pH of 8.6, a solid content of the scale inhibiting and fouling preventing agent of 4 mg/liter, a calcium hardness, in terms of CaCO₃ content, of 100 mg/liter, an M-alkalinity, in terms of CaCO₃ content, of 100 mg/liter, a phosphate ion concentration, in terms of PO₄³⁻, of 6.0 mg/liter and a zinc ion concentration, in terms of Zn²⁺, of 3.5 mg/liter.

The conical beaker was sealed with a polyethylene film, and left in a water bath filled with water having a controlled temperature of 60°C. After 40 hours, the test liquid was taken out and filtered through a filter paper having a pore diameter of 0.1 *µ*m, and the phosphate ion concentration and the zinc ion concentration remained in the resulting filtrate were measured to be 9.0 mg/liter in total of the two.

### Comparative Example 10:

The same experiment as in Example 7 was repeated except that a solution of sodium salt of isoprenesulfonic acid/acrylic acid (25/75, by mol%) copolymer having a weight-average molecular weight of 22,000 was used as the scale inhibiting and fouling preventing agent and that the concentration of the agent was 4 mg, in terms of the solid content, per liter. The sum of the phosphate ion concentration and the zinc ion concentration remained in the filtrate was 9.0 mg/liter.

### Comparative Example 11

The same experiment as in Example 7 was repeated except that a solution of sodium polyacrylate having a weight average molecular weight of 5,000 was used as the scale inhibiting and fouling preventing agent and that the concentration of the agent was 10 mg, in terms of the solid content, per liter. In this, an aqueous solution of 1 wt.%-sodium hydroxide was used for the adjustment of the pH of the mixture in the last step. The sum of the phosphate ion concentration and the zinc ion concentration remained in the filtrate was 3.5 mg/liter.

### Comparative Example 12:

The same experiment as in Example 7 was repeated except that no scale inhibiting and fouling preventing agent was added. In this, an aqueous solution of 1 wt.%-sodium hydroxide was used for the adjustment of the pH of the mixture in the last step. The sum of the phosphate ion concentration and the zinc ion concentration remained in the filtrate was 0.2 mg/liter.

The results of Example 7 and Comparative Examples 10 to 12 are shown in Table 3.

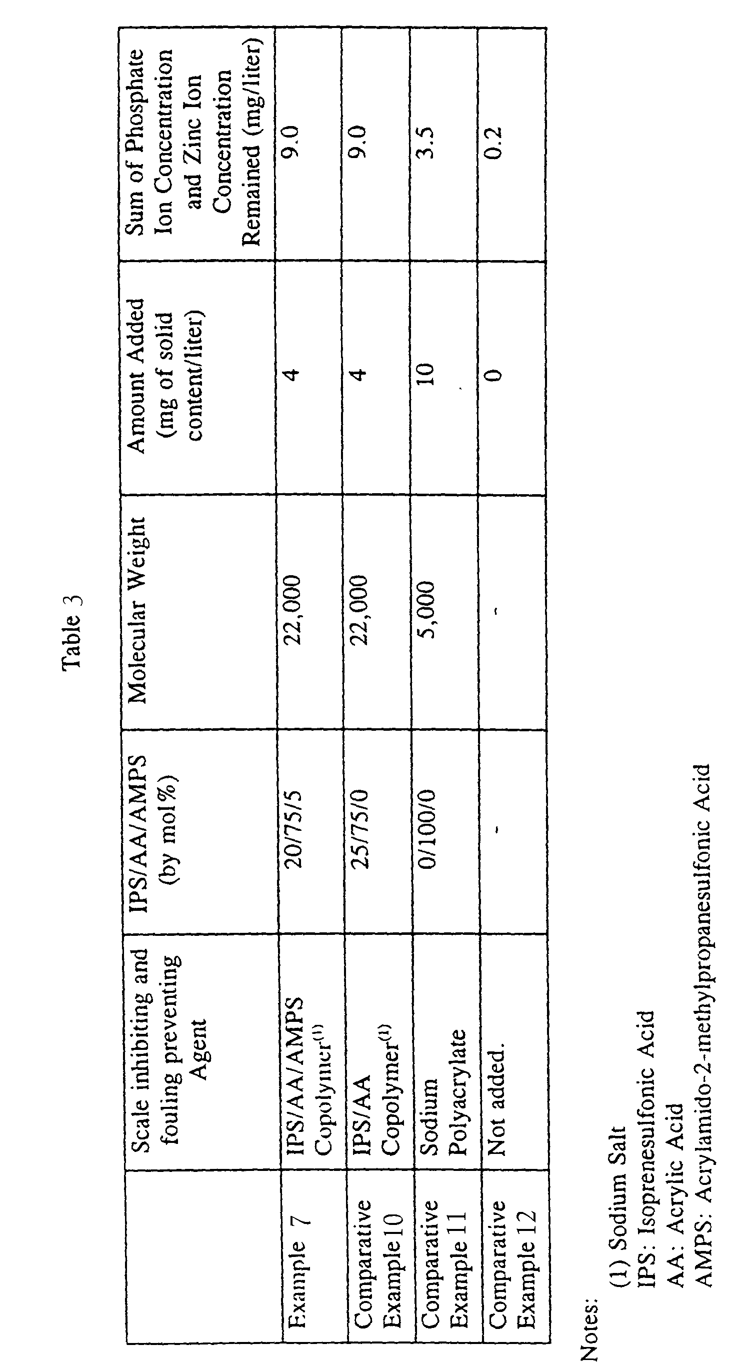

If the effect of the scale inhibiting and fouling preventing agent tested against the precipitation of zinc phosphate is larger, the test liquid to which the agent was added shall produce a smaller amount of the precipitate of zinc phosphate therein and therefore the sum of the phosphate ion content and the zinc ion content of the filtrate from the test liquid containing the agent shall be near to the sum of the phosphate ion content and the zinc ion content of the original test liquid which is 9.5 mg/liter. However, if the effect of the scale inhibiting and fouling preventing agent tested against the precipitation of zinc phosphate is smaller, the test liquid to which the agent was added shall produce a larger amount of the precipitate of zinc phosphate therein. Since the precipitate is removed through the filtration of the test liquid containing the agent, the filtrate shall have a smaller phosphate ion content and a smaller zinc ion content.

From the results in Table 3, it is known that both the addition of the scale inhibiting and fouling preventing agent of the present invention comprising an isoprenesulfonic acid/acrylic acid/acrylamido-2-methylpropanesulfonic acid copolymer to the test liquid in an amount of 4 mg, in terms of the solid content of the agent, per liter of the test liquid and the addition of the comparative agent comprising an isoprenesulfonic acid/acrylic acid copolymer to the same in the same amount resulted in the same amount of the sum of the phosphate ion concentration and the zinc ion concentration remained in the filtrate, which is 9.0 mg/liter. This verifies that the two agents have the same effect against the precipitation of zinc phosphate in the test liquid. However, as has been known from the results in Table 2, the effect of the scale inhibiting and fouling preventing agent of the present invention comprising an isoprenesulfonic acid/acrylic acid/acrylamido-2-methylpropanesulfonic acid against the precipitation of calcium phosphate is higher than that of the comparative agent comprising an isoprenesulfonic acid/acrylic acid against the same. From these, therefore, it is understood that the scale inhibiting and fouling preventing agent of the present invention is preferable to the comparative agent, as being more effectively applicable to various objects than the latter

Regarding the other comparative agent comprising a sodium polyacrylate, even when it was added to the same test liquid in an amount of 10 mg, in terms of the solid content of the agent, per liter of the test liquid, the sum of the phosphate ion concentration and the zinc ion concentration remained in the filtrate was only 3.5 mg/liter.

### Example 8:

### Test for Preventing Precipitation of Iron Oxide and Iron Hydroxide:

Demineralized water, a solution of sodium salt of isoprenesulfonic acid/acrylic acid/acrylamido-2-methylpropanesulfonic acid (20/75/5, by mol%) copolymer having a weight average molecular weight of 15,000 (this is a scale inhibiting and fouling preventing agent), a solution of sodium hydrogencarbonate, a solution of sodium silicate No. 3, a solution of calcium chloride, a solution of magnesium sulfate and a solution of ferric chloride were put into a 500-ml conical beaker in that order. Last, an aqueous solution of 1 wt.% sulfuric acid was added thereto to adjust the pH of the resulting mixture. Thus was prepared 500 ml of a test liquid having a pH of 8.8, a solid content of the scale inhibiting and fouling preventing agent of 5.0 mg/liter, a calcium hardness, in terms of CaCO₃ content, of 250 mg/liter, a magnesium hardness, in terms of CaCO₃ content, of 100 mg/liter, an M alkalinity, in terms of CaCO₃ content, of 250 mg/liter, a silica content, in terms of SiO₂, of 100 mg/liter and a total iron content, in terms of Fe, of 10 mg/liter.

The conical beaker was sealed with a polyethylene film, and left in a water bath filled with water having a controlled temperature of 30°C, for 20 hours. After this, the beaker was taken out, and the dissolved iron content of the supernatant thus separated in the beaker was measured to be 10.0 mg Fe/liter.

### Example 9:

The same experiment as in Example 8 was repeated, except that a solution of sodium salt of isoprenesulfonic acid/acrylic acid/acrylamido-2-methylpropanesulfonic acid (20/75/5, by mol%) copolymer having a weight average molecular weight of 22,000 was used as the scale inhibiting and fouling preventing agent and that the concentration of the agent was 5.0 mg, in terms of the solid content, per liter. The dissolved iron content of the supernatant was 10.0 mg Fe/liter.

### Comparative Example 13:

The same experiment as in Example 8 was repeated, except that a solution of sodium salt of isoprenesulfonic acid/acrylic acid (25/75, by mol%) copolymer having a weight average molecular weight of 16,000 was used as the scale inhibiting and the fouling preventing agent and that the concentration of the agent was 7.5 mg, in terms of the solid content, per liter. In this, an aqueous solution of 1 wt.%-sulfuric acid was used for the adjustment of the pH of the mixture in the last step. The dissolved iron content of the supernatant was 10.0 mg Fe/liter.

### Comparative Example 14:

The same experiment as in Example 8 was repeated, except that the same scale inhibiting and fouling preventing agent as that used in Comparative Example 13 was used and that the concentration of the agent was varied to 5.0 mg, in terms of the solid content, per liter. In this, an aqueous solution of 1 wt.%-sulfuric acid was used for the adjustment of the pH of the mixture in the last step. The dissolved iron content of the supernatant was 7.8 mg Fe/liter.

### Comparative Example 15:

The same experiment as in Example 8 was repeated, except that a solution of sodium salt of isoprenesulfonic acid/acrylic acid (25/75, by mol%) copolymer having a weight average molecular weight of 22,000 was used as the scale inhibiting and the fouling preventing agent and that the concentration of the agent was 7.5 mg, in terms of the solid content, per liter. In this, an aqueous solution of 1 wt.%-sulfuric acid was used for the adjustment of the pH of the mixture in the last step. The dissolved iron content of the supernatant was 10.0 mg Fe/liter.

### Comparative Example 16:

The same experiment as in Example 8 was repeated, except that the same scale inhibiting and fouling preventing agent as that used in Comparative Example 15 was used and that the concentration of the agent was varied to 5.0 mg, in terms of the solid content, per liter. In this, an aqueous solution of 1 wt.%-sulfuric acid was used for the adjustment of the pH of the mixture in the last step. The dissolved iron content of the supernatant was 8.0 mg Fe/liter.

### Comparative Example 17:

The same experiment as in Example 9 was repeated, except that a solution of sodium hexametaphosphate was used as the scale inhibiting and fouling preventing agent and that the concentration of the agent was 10.0 mg, in terms of the solid content, per liter. In this, an aqueous solution of 1 wt.%-sulfuric acid was used for the adjustment of the pH of the mixture in the last step. The dissolved iron content of the supernatant was 3.3 mg Fe/liter.

### Comparative Example 18:

The same experiment as in Example 8 was repeated, except that a solution of sodium hexametaphosphate was used as the scale inhibiting and fouling preventing agent and that the concentration of the agent was 7.5 mg, in terms of the solid content, per liter. In this, an aqueous solution of 1 wt.%-sulfuric acid was used for the adjustment of the pH of the mixture in the last step. The dissolved iron content of the supernatant was 2.4 mg Fe/liter.

### Comparative Example 19:

The same experiment as in Example 8 was repeated, except that a solution of sodium polyacrylate having a weight average molecular weight of 5,000 was used as the scale inhibiting and fouling preventing agent and that the concentration of the agent was 10.0 mg, in terms of the solid content, per liter. In this, an aqueous solution of 1 wt.%-sulfuric acid was used for the adjustment of the pH of the mixture in the last step. The dissolved iron content of the supernatant was 6.0 mg Fe/liter.

### Comparative Example 20:

The same experiment as in Example 8 was repeated, except that no scale inhibiting and fouling preventing agent was added. In this, an aqueous solution of 1 wt.%-sulfuric acid was used for the adjustment of the pH of the mixture in the last step. The dissolved iron content of the supernatant was 0.4 mg Fe/liter.

The results of Examples 8 to 9 and Comparative Examples 13 to 20 are shown in Table 4.

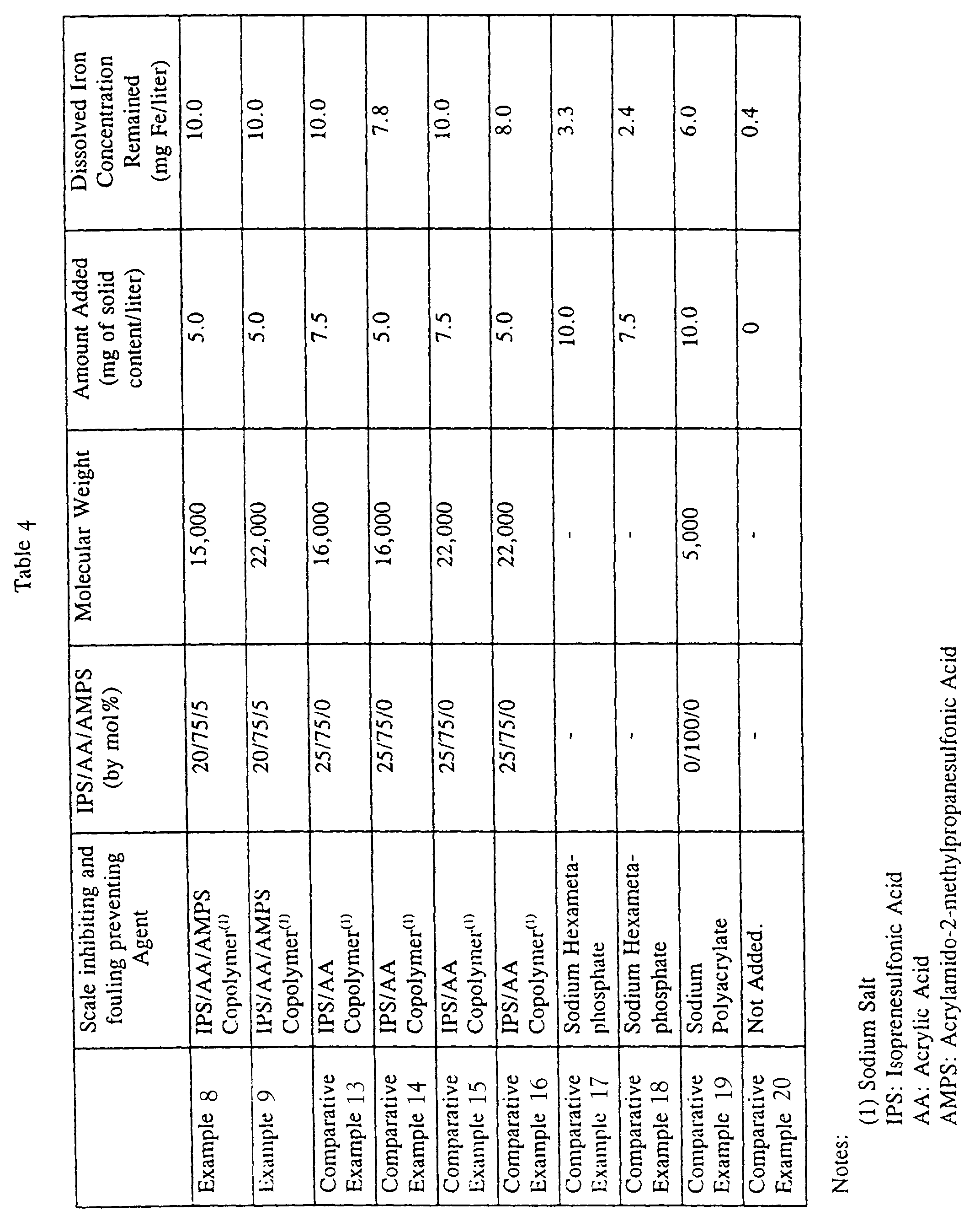

If no scale inhibiting and fouling preventing agent is added to the test liquid or if the effect of the scale inhibiting and fouling preventing agent as added thereto is not satisfactory, the iron component as existing in the test liquid shall be precipitated in the form of iron oxide hydrate or iron hydroxide. Therefore, the effect of the scale inhibiting and fouling preventing agent as added to the test liquid for dispersing the iron oxide or iron hydroxide precipitate formed in the test liquid can be evaluated from the data of the dissolved iron content of the supernatant separated from the test liquid to which the agent was added.

The scale inhibiting and fouling preventing agent of the present invention comprising an isoprenesulfonic acid/acrylic acid/acrylamido-2-methylpropanesulfonic acid copolymer, when added to the test liquid in an amount of 5 mg, in terms of the solid content thereof, per liter, inhibited the precipitation of iron of 10 mg/liter, while acting to completely disperse and keep it in water in the test liquid. As opposed to this, however, when the comparative agent comprising an isoprenesulfonic acid/acrylic acid copolymer was added to the same test liquid in an amount of 5 mg, in terms of the solid content thereof, per liter, it could not inhibit the precipitation of iron of 10 mg/liter. In order to inhibit the precipitation of iron of 10 mg/liter in the test liquid, it was necessary to add 7.5 mg/liter, in terms of the solid content, of the comparative agent to the test liquid. Regarding the other comparative agents comprising sodium hexametaphosphate or sodium polyacrylate of the prior art, they could not inhibit the precipitation of iron of 10 mg/liter in the test liquid even when they were added to the test liquid in an amount of 10 mg, in terms of the solid content, per liter. From these, it is understood that the scale inhibiting and fouling preventing agent of the present invention has a much more excellent effect for dispersing iron oxide and iron hydroxide in water than the comparative agents comprising sodium hexametaphosphate or sodium polyacrylate.

### Example 10, Comparative Example 21:

### Scaling and Corrosion Tests in Pilot Plant of Open Recirculating, Cooling water System (Cooling Tower) - Part 1:

Using a pilot plant as shown in Fig. 1, the water-treating agent of the present invention was tested with respect to its preventing effect against scaling and corrosion therein. The test period was 23 days.

The water balance in the cooling system is shown in Table 5. The quality of make up water as supplied to the system and that of the cooling water as circulating therein are shown in Table 6. The operational conditions for the heat exchangers used herein are shown in Table 7. The chemicals used herein and their concentrations are shown in Table 8.

**Table 5 -**

| Water Balance in Cooling System | |
|---|---|
| Amount of Cooling Water (liter/hr) | 810 |
| Evaporation Loss (liter/hr) | 6 |
| Total Amount of Blow Water (liter/hr) | 1.5 |
| Amount of Make-up Water (liter/hr) | 7.5 |
| Cycles of Concentration^{(*1)} | 5.0 |
| Supply Water Temperature (°C) | 40 |
| Return Water Temperature (°C) | 47 |
| Holding Water Volume (liter) | 95 |
| Retention Time^{(*2)} (hr) | 63 |

| | |
|---|---|
| (*1) Cycles of Concentration = (amount of water make-up water, liter/hr)/( amount of total blowdown, liter/hr) | |
| (*2) Retention Time (hr) = (holding water volume of system, liter)/( amount of total blowdown, liter/hr) | |

**Table 6 -**

| Quality of Make-up Water and Quality of Cooling Water | | |
|---|---|---|
| | Make-up water | Cooling Water |
| pH | 7.5-7.9 | 8.9-9.2 |
| Electrical conductivity (*µ*S/cm) | 297-352 | 1,483-1,760 |
| Total Hardness (mg CaCO₃/liter) | 91-120 | 455-598 |
| Calcium Hardness (mg CaCO₃/liter) | 70-92 | 350-460 |
| Magnesium Hardness (mg CaCO₃/liter) | 21-28 | 105-138 |
| M-alkalinity (mg CaCO₃/liter) | 75-80 | 375-400 |
| Chloride Ion (mg/liter) | 38-46 | 190-230 |
| Sulfate Ion (mg/liter) | 16-22 | 80-110 |
| Silica (mg SiO₂/liter) | 29-37 | 146-184 |

**Table 7 -**

| Operational Conditions of Heat Exchangers | | |
|---|---|---|
| Temperature of Water (°C) | Inlet of Heat Exchanger Part No. 1 (H/E1) | 40 |
| | Outlet of Heat Exchanger Part No. 4 (H/E 4) | 47 |
| Skin Temperature of Heat Exchanger Tube (at outlet of H/E 4) (°C) | | 70 |
| Water Flow Velocity in Heat Exchanger (m/s) | | 0.6 |
| Heat Flux (kcal/m².h) | | 39,000 |
| Material of Heat Exchanger Tubes | | Carbon Steel |

**Table 8 -**

| Chemicals Used | | | |
|---|---|---|---|
| | | Example 10 | Comparative Example 21 |
| Corrosion Inhibitor (mg/liter) | HEDP^{(*3)} | 4.0 | 4.0 |
| | BT^{(*4)} | 0.5 | 0.5 |
| Scale inhibiting Agent (mg solid/liter) | IPS/AA/AMP S^{(*5)} | 11.0 | - |
| | | - | - |
| | IPS/AA^{(*6)} | - | 11.0 |

| | | | |
|---|---|---|---|
| (*3): 2-hydroxyethylidene-diphosphonic Acid | | | |
| (*4): Benzotriazole | | | |
| (*5): Isoprenesulfonic acid (IPS)/Acrylic acid (AA)/Acrylamido-2-methylpropanesulfonic acid (AMPS) Copolymer having a molar ratio, IPS/AA/AMPS of 15/75/10 and a molecular weight of 15,000 | | | |
| (*6): IPS/AA Copolymer having a molar ratio, IPS/AA of 25/75 and a molecular weight of 16,000 | | | |

The corrosion rate of the test electrodes as installed at the inlet of the heat exchanger No. 1 (H/E 1) and at the outlet of the heat exchanger No. 4 (H/E 4) was measured, using a corrosion monitor (Corrosion Monitor 500C Model, produced by Toho Giken KK) in accordance with a linear polarization method. The results obtained are shown in Table 9. The scaling rate on the heat transfer tube of each heat exchanger was measured and shown in Table 10.

**Table 9 -**

| Results of Corrosion Test | | | |
|---|---|---|---|
| Installation of Electrode | Material of Electrode | Rate of Corrosion (mg/dm^{2.} day) | |
| | | Example 10 | Comparative Example 21 |
| Inlet of H/E 1 (temperature of water: 40°C) | Carbon Steel | 5.5 | 6.4 |
| | Copper | 0.5 | 0.8 |
| Outlet of H/E 4 (temperature of water: 47°C) | Carbon Steel | 7.4 | 10.1 |
| | Copper | 0.8 | 1.2 |

**Table 10 -**

| Results of Scaling Test | | |
|---|---|---|
| Heat Exchanger | Scaling Rate (mg/cm² month) | |
| | Example 10 | Comparative Example 21 |
| H/E 1 (temperature of water at inlet: 40°C) | 0.9 | 3.4 |
| H/E 2 | 0.9 | 3.5 |
| H/E 3 | 2.0 | 8.9 |
| H/E 4 (temperature of water at outlet: 47°C) | 2.6 | 12.7 |

As it is obvious from the test results mentioned above, the compositions of the present invention of Example 10 are superior to the comparative composition of Comparative Example 21 as being more effective against the corrosion of carbon steel and copper and against the scaling of heat transfer tubes in the heat exchangers than the latter.

The scale formed in this experiment consisted essentially of magnesium silicate of 65 % of all the components constituting it in Comparative Example 21, while the magnesium silicate content of the scale formed in Example 10 was 35 %. It is obvious from these that the effect of the compositions of the present invention against the formation of silica scale is higher than that of the comparative composition.

Accordingly, it is obvious from these data that the scale inhibiting and fouling preventing agent of the present invention, which is obtained by introducing a third component of acrylamido-2-methylpropanesulfonic acid into an isoprenesulfonic acid-acrylic acid copolymer, exhibits a higher effect against corrosion and scaling in water systems, when combined with a corrosion inhibitor, than an isoprenesulfonic acid acrylic acid copolymer.

As has been described in detail and demonstrated concretely hereinabove, the water treating agent of the present invention, comprising a conjugated dienesulfonic acid/(meth)acrylic acid/(meth)acrylamido-2-methylalkanesulfonic acid copolymer exhibits an excellent anti scaling and anti fouling effect in water systems and can therefore prevent water systems from being disordered by thermal efficiency depression and water flow rate depression to be caused by adhesion or deposition of scale, sludge and slime onto heat exchangers, heat transfer heating pipes and pipe lines that constitute water systems.

While the invention has been described in detail and with reference to specific embodiments thereof, it will be apparent to one skilled in the art that various changes and modifications can be made therein without departing from the scope of the claims.

## Claims

1. A water treating agent comprising a ternary copolymer which is synthesized from a conjugated dienesulfonic acid and/or its salt of the following general formula [1]: 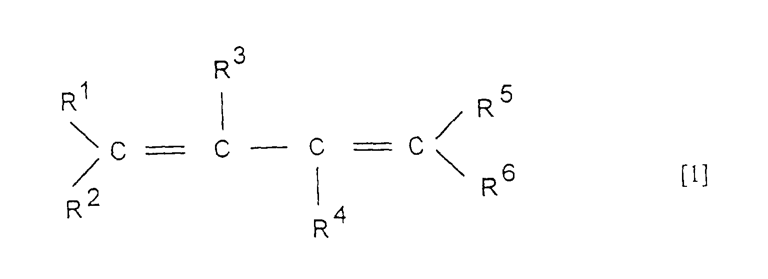 wherein R¹, R², R³, R⁴, R⁵ and R⁶ each represent a hydrogen atom, a methyl group or -SO₃X¹, provided that one or more of R¹ to R⁶ are methyl groups, one or more of the remaining R¹ to R⁶ are groups of -SO₃X¹, and X¹ represents a hydrogen atom, a monovalent metal, or an ammonium group unsubstituted or mono substituted by an organic group;
a (meth)acrylic acid and/or its salts of the following general formula [2]: 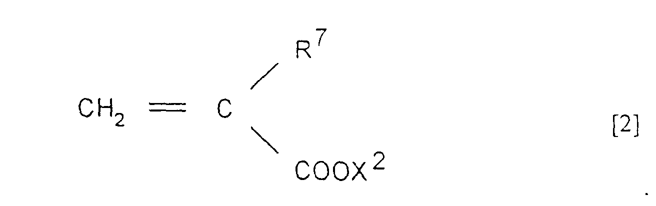 wherein R⁷ represents a hydrogen atom or a methyl group; and X² represents a hydrogen atom, a monovalent metal, or an ammonium group unsubstituted or mono substituted by an organic group;
and a (meth)acrylamido-2-methylalkanesulfonic acid and/or its salt of the following general formula [4]: 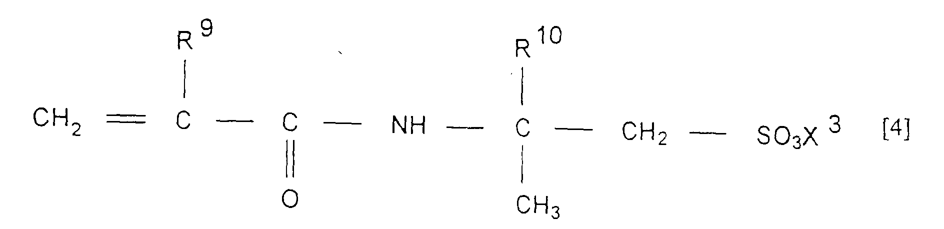 wherein R⁹ and R¹⁰ each represent a hydrogen atom or a methyl group; and X³ represents a hydrogen atom, a monovalent metal, or an ammonium group unsubstituted or mono substituted by an organic group.

2. The water treating agent as claimed in claim 1, wherein the ternary copolymer comprises from 5 to 50 mol% of the unit derived from the conjugated dienesulfonic acid and/or its salt, from 40 to 90 mol% of the unit derived from the (meth)acrylic acid and/or its salt, and from 1 to 20 mol% of the unit derived from the (meth)acrylamido-2-methylalkanesulfonic acid and/or its salt.

3. The water treating agent as claimed in claim 1 or 2, wherein the ternary copolymer has a weight-average molecular weight of from 500 to 300,000.

4. The water treating agent as claimed in claim 1, which further comprises a metal corrosion inhibitor.

5. The water treating agent as claimed in claim 4, wherein the metal corrosion inhibitor comprises at least one selected from the group consisting of polyvalent metal salts, phosphonates, azoles, phosphates, polyphosphates, phosphonocarboxylates, amines and phosphoric esters.

6. A method for treating water, comprising adding to water systems a water treating agent that comprises a ternary copolymer as synthesized from a conjugated dienesulfonic acid and/or its salt of the following general formula [1]: 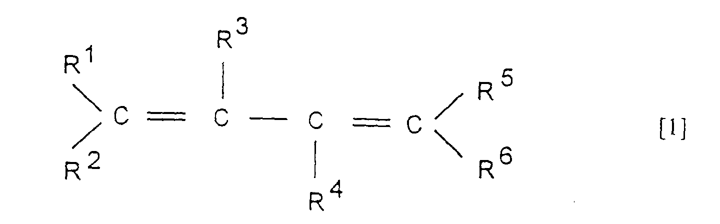 wherein R¹, R², R³, R⁴, R⁵ and R⁶ each represent a hydrogen atom, a methyl group or -SO₃X¹, provided that one or more of R¹ to R⁶ are methyl groups, one or more of the remaining R¹ to R⁶ are groups of -SO₃X¹, and X¹ represents a hydrogen atom, a monovalent metal, or an ammonium group unsubstituted or mono substituted by an organic group;
a (meth)acrylic acid and/or its salts of the following general formula [2]: 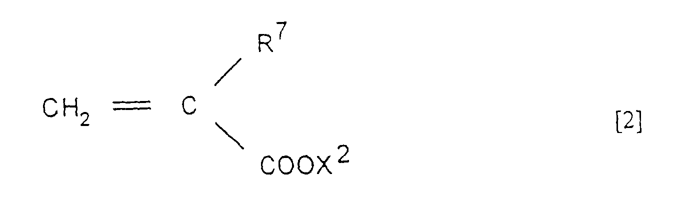 wherein R⁷ represents a hydrogen atom or a methyl group; and X² represents a hydrogen atom, a monovalent metal, or an ammonium group unsubstituted or mono substituted by an organic group;
and a (meth)acrylamido-2-methylalkanesulfonic acid and/or its salt of the following general formula [4]: 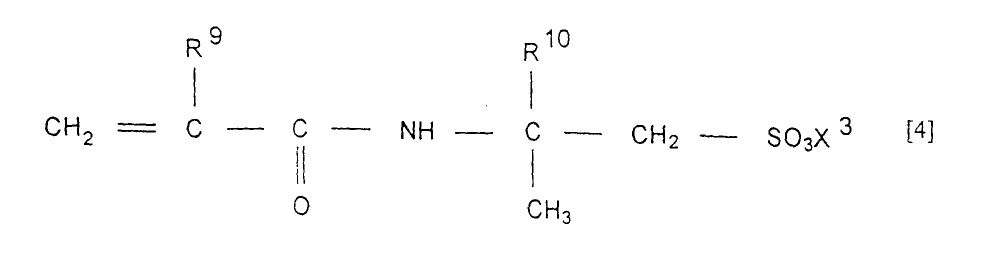 wherein R⁹ and R¹⁰ each represent a hydrogen atom or a methyl group; and X³ represents a hydrogen atom, a monovalent metal, or an ammonium group unsubstituted or mono substituted by an organic group,
in an amount of from 0.1 to 1000 mg/liter.

7. The method for treating water as claimed in claim 6, wherein the ternary copolymer to be in the water-treating agent comprises from 5 to 50 mol% of the unit derived from the conjugated dienesulfonic acid and/or its salt, from 40 to 90 mol% of the unit derived from the (meth)acrylic acid and/or its salt, and from 1 to 20 mol% of the unit derived from the (meth)acrylamido-2-methylalkanesulfonic acid and/or its salt.

8. The method for treating water as claimed in claim 6 or 7 wherein the ternary copolymer to be in the water treating agent has a weight average molecular weight of from 500 to 300,000.

9. The method for treating water as claimed in claim 6, wherein the water treating agent further comprises a metal corrosion inhibitor in addition to the ternary copolymer.

10. The method for treating water as claimed in claim 9, wherein the metal corrosion inhibitor comprises at least one selected from the group consisting of polyvalent metal salts, phosphonates, azoles, phosphates, polyphosphates, phosphonocarboxylates, amines and phosphoric esters.

## Patentansprüche

1. Wasserbehandlungsmittel, welches ein ternäres Copolymer umfaßt, das synthetisiert ist aus einer konjugierten Diensulfonsäure und/oder ihrem Salz der folgenden allgemeinen Formel [1]: 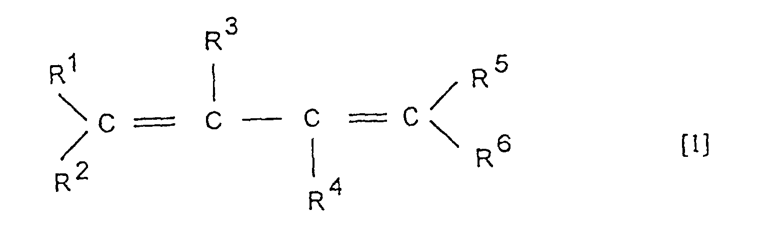 wobei R¹, R², R³, R⁴, R⁵ und R⁶ jeweils ein Wasserstoffatom, eine Methylgruppe oder -SO₃X¹ darstellen, vorausgesetzt daß eine oder mehrere der Gruppen R¹ bis R⁶ Methylgruppen sind, eine oder mehrere der restlichen Gruppen R¹ bis R⁶ -SO₃X¹-Gruppen sind und X¹ ein Wasserstoffatom, ein einwertiges Metall oder eine Ammoniumgruppe, unsubstituiert oder monosubstituiert durch eine organische Gruppe, darstellt;
einer (Meth)acrylsäure und/oder ihren Salzen der folgenden allgemeinen Formel [2]: 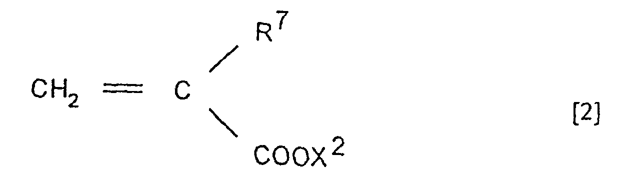 wobei R⁷ ein Wasserstoffatom oder eine Methylgruppe darstellt; und X² ein Wasserstoffatom, ein einwertiges Metall oder eine Ammoniumgruppe, unsubstituiert oder monosubstituiert durch eine organische Gruppe, darstellt;
und einer (Meth)acrylamido-2-methylalkansulfonsäure und/oder ihrem Salz der folgenden allgemeinen Formel [4]: 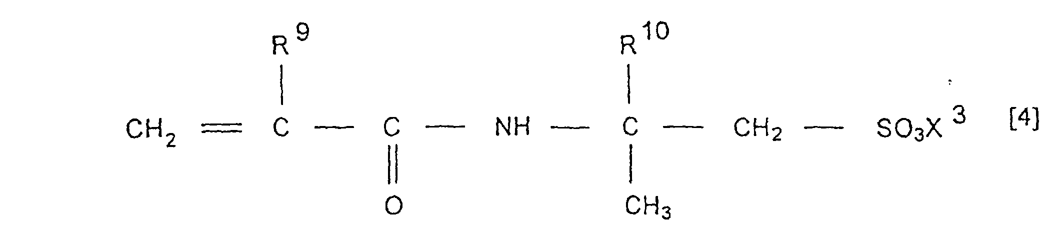 wobei R⁹ und R¹⁰ jeweils ein Wasserstoffatom oder eine Methylgruppe darstellen; und X³ ein Wasserstoffatom, ein einwertiges Metall oder eine Ammoniumgruppe, unsubstituiert oder monosubstituiert durch eine organische Gruppe, darstellt.

2. Wasserbehandlungsmittel nach Anspruch 1, **dadurch gekennzeichnet, daß** das ternäre Copolymer von 5 bis 50 Mol-% der von der konjugierten Diensulfonsäure und/oder ihrem Salz abgeleiteten Einheit, von 40 bis 90 Mol-% der von der (Meth)acrylsäure und/oder ihrem Salz abgeleiteten Einheit und von 1 bis 20 Mol-% der von der (Meth)acrylamido-2-methylalkansulfonsäure und/oder ihrem Salz abgeleiteten Einheit umfaßt.

3. Wasserbehandlungsmittel nach Anspruch 1 oder 2, **dadurch gekennzeichnet, daß** das ternäre Copolymer ein gewichtsgemitteltes Molekulargewicht von 500 bis 300.000 besitzt.

4. Wasserbehandlungsmittel nach Anspruch 1, **dadurch gekennzeichnet, daß** es weiterhin einen Metallkorrosionsinhibitor umfaßt.

5. Wasserbehandlungsmittel nach Anspruch 4, **dadurch gekennzeichnet, daß** der Metallkorrosionsinhibitor wenigstens einen umfaßt, der aus der Gruppe ausgewählt ist, die aus mehrwertigen Metallsalzen, Phosphonaten, Azolen, Phosphaten, Polyphosphaten, Phosphonocarboxylaten, Aminen und Phosphorsäureestem besteht.

6. Wasserbehandlungsverfahren, welches umfaßt, daß zu Wassersystemen ein Wasserbehandlungsmittel zugegeben wird, welches ein ternäres Copolymer umfaßt, das synthetisiert ist aus einer konjugierten Diensulfonsäure und/oder ihrem Salz der folgenden allgemeinen Formel [1]: 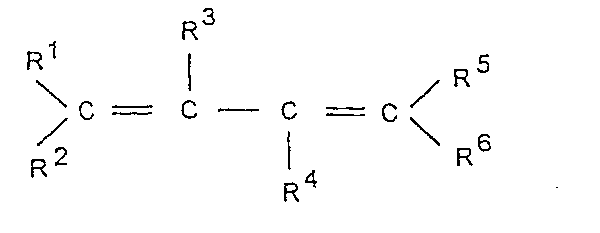 wobei R¹, R², R³, R⁴, R⁵ und R⁶ jeweils ein Wasserstoffatom, eine Methylgruppe oder -SO₃X¹ darstellen, vorausgesetzt daß eine oder mehrere der Gruppen R¹ bis R⁶ Methylgruppen sind, eine oder mehrere der restlichen Gruppen R¹ bis R⁶ -SO₃X¹-Gruppen sind und X¹ ein Wasserstoffatom, ein einwertiges Metall oder eine Ammoniumgruppe, unsubstituiert oder monosubstituiert durch eine organische Gruppe, darstellt;
einer (Meth)acrylsäure und/oder ihren Salzen der folgenden allgemeinen Formel [2]: 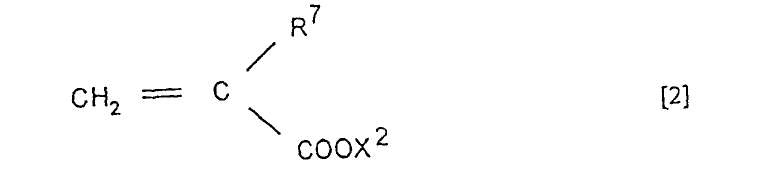 wobei R⁷ ein Wasserstoffatom oder eine Methylgruppe darstellt; und X² ein Wasserstoffatom, ein einwertiges Metall oder eine Ammoniumgruppe, unsubstituiert oder monosubstituiert durch eine organische Gruppe, darstellt;
und einer (Meth)acrylamido-2-methylalkansulfonsäure und/oder ihrem Salz der folgenden allgemeinen Formel [4]: 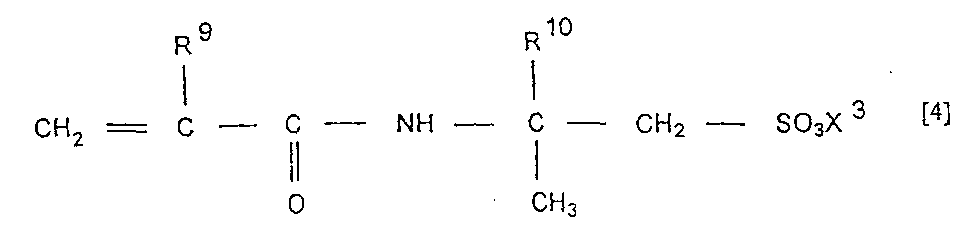 wobei R⁹ und R¹⁰ jeweils ein Wasserstoffatom oder eine Methylgruppe darstellen; und X³ ein Wasserstoffatom, ein einwertiges Metall oder eine Ammoniurngruppe, unsubstituiert oder monosubstituiert durch eine organische Gruppe, darstellt,
in einer Menge von 0,1 bis 1.000 mg/l.

7. Wasserbehandlungsverfahren nach Anspruch 6, **dadurch gekennzeichnet, daß** das ternäre Copolymer, das im Wasserbehandlungsmittel vorliegen soll, von 5 bis 50 Mol-% der von der konjugierten Diensulfonsäure und/oder ihrem Salz abgeleiteten Einheit, von 40 bis 90 Mol-% der von der (Meth)acrylsäure und/oder ihrem Salz abgeleiteten Einheit und von 1 bis 20 Mol-% der von der (Meth)acrylamido-2-methylalkansulfonsäure und/oder ihrem Salz abgeleiteten Einheit umfaßt.

8. Wasserbehandlungsverfahren nach Anspruch 6 oder 7, **dadurch gekennzeichnet, daß** das ternäre Copolymer, das im Wasserbehandlungsmittel vorliegen soll, ein gewichtsgemitteltes Molekulargewicht von 500 bis 300.000 besitzt.

9. Wasserbehandlungsverfahren nach Anspruch 6, **dadurch gekennzeichnet, daß** das Wasserbehandlungsmittel weiterhin einen Metallkorrosionsinhibitor zusätzlich zum ternären Copolymer umfaßt.

10. Wasserbehandlungsverfahren nach Anspruch 9, **dadurch gekennzeichnet, daß** der Metallkorrosionsinhibitor wenigstens einen umfaßt, der ausgewählt ist aus der Gruppe, die aus mehrwertigen Metallsalzen, Phopshonaten, Azolen, Phosphaten, Polyphosphaten, Phosphonocarboxylaten, Aminen und Phosphorsäureestern besteht.

## Revendications

1. Agent de traitement de l'eau comprenant un copolymère ternaire qui est synthétisé à partir d'un acide diène-sulfonique conjugué et/ou de son sel de formule générale [1] : 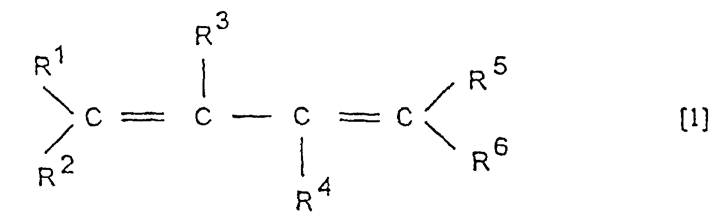 dans laquelle R¹, R², R³, R⁴, R⁵ et R⁶ représentent chacun un atome d'hydrogène, un groupement méthyle ou -SO₃X¹, à la condition qu'un ou plusieurs de R¹ à R⁶ soient des groupements méthyle, un ou plusieurs des R¹ à R⁶ restants soient des groupements -SO₃X¹, et X¹ représente un atome d'hydrogène, un métal monovalent ou un groupement ammonium non substitué ou monosubstitué par un groupement organique,
d'un acide (méth)acrylique et/ou de ses sels de formule générale [2] suivante : 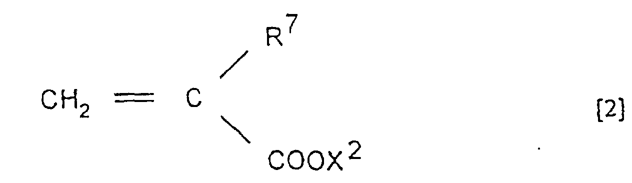 dans laquelle R⁷ représente un atome d'hydrogène ou un groupement méthyle, et X² représente un atome d'hydrogène, un métal monovalent, ou un groupement ammonium non substitué ou monosubstitué par un groupement organique,
et d'un acide (méth)acrylamido-2-méthylalcane-sulfonique et/ou de son sel de formule générale [4] suivante : 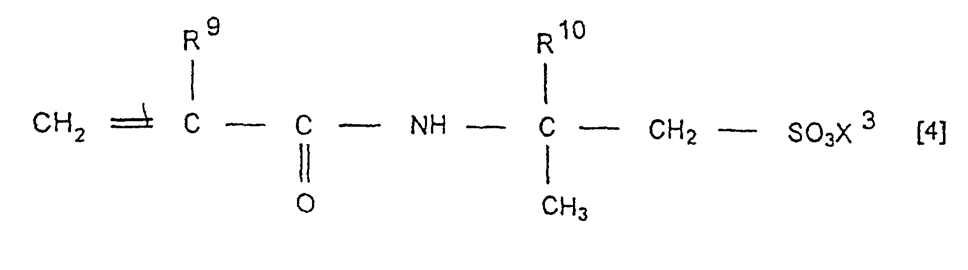 dans laquelle R⁹ et R¹⁰ représentent chacun un atome d'hydrogène ou un groupement méthyle, et X³ présente un atome d'hydrogène, un métal monovalent ou un groupement ammonium non substitué ou monosubstitué par un groupement organique.

2. Agent de traitement de l'eau selon la revendication 1, dans lequel le copolymère ternaire comprend de 5 à 50 % en mol de l'unité dérivée de l'acide diène-sulfonique conjugué et/ou de son sel, de 40 à 90 % en mol de l'unité dérivée de l'acide (méth)acrylique et/ou de son sel, et de 1 à 20 % en mol de l'unité dérivée de l'acide (méth)acrylamido-2-méthylalcanesulfonique et/ou de son sel.

3. Agent de traitement de l'eau selon la revendication 1 ou 2, dans lequel le copolymère ternaire présente une masse moléculaire moyenne en poids de 500 à 300 000.

4. Agent de traitement de l'eau selon la revendication 1, qui comprend en outre un inhibiteur de corrosion du métal.

5. Agent de traitement de l'eau selon la revendication 4, dans lequel l'inhibiteur de corrosion du métal comprend au moins un composant choisi parmi le groupe constitué de sels de métaux plurivalents, de phosphonates, d'azoles, de phosphates, de polyphosphates, de phosphonocarboxylates, d'amines et d'esters phosphoriques.

6. Procédé de traitement de l'eau, comprenant l'addition à des systèmes d'eaux d'un agent de traitement de l'eau qui comprend un copolymère ternaire qui est synthétisé à partir d'un acide diène-sulfonique conjugué et/ou de son sel de formule générale [1] suivante : 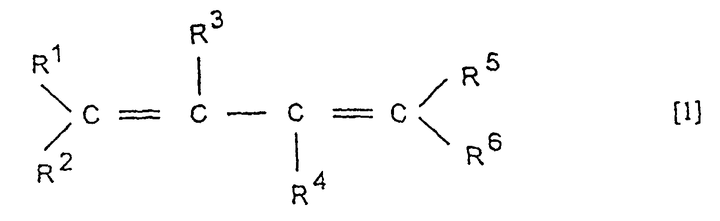 dans laquelle R¹, R², R³, R⁴, R⁵ et R⁶ représentent chacun un atome d'hydrogène, un groupement méthyle ou -SO₃X¹, à la condition qu'un ou plusieurs de R¹ à R⁶ soient des groupements méthyle, un ou plusieurs des R¹ à R⁶ restants soient des groupements -SO₃X¹, et X¹ représente un atome d'hydrogène, un métal monovalent, ou un groupement ammonium non substitué ou monosubstitué par un groupement organique,
d'un acide (méth)acrylique et/ou de ses sels de formule générale [2] suivante : 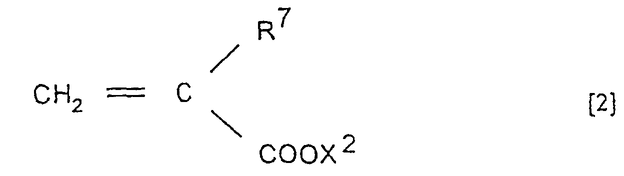 dans laquelle R⁷ représente un atome d'hydrogène ou un groupement méthyle, et X² représente un atome d'hydrogène, un métal monovalent, ou un groupement ammonium non substitué ou monosubstitué par un groupement organique,
et d'un acide (méth)acrylamido-2-méthylalcane-sulfonique et/ou de son sel de formule générale [4] suivante : 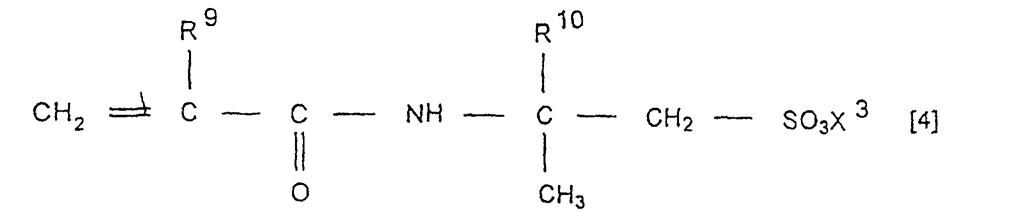 dans laquelle R⁹ et R¹⁰ représentent chacun un atome d'hydrogène ou un groupement méthyle, et X³ présente un atome d'hydrogène, un métal monovalent ou un groupement ammonium non substitué ou monosubstitué par un groupement organique
dans une proportion de 0,1 à 1 000 mg/litre.

7. Procédé de traitement de l'eau selon la revendication 6, dans lequel le copolymère ternaire devant se trouver dans l'agent de traitement de l'eau comprend de 5 à 50 % en mol de l'unité dérivée de l'acide diène-sulfonique conjugué et/ou de son sel, de 40 à 90 % en mol de l'unité dérivée de l'acide (méth)acrylique et/ou de son sel, et de 1 à 20 % en mol de l'unité dérivée de l'acide (méth)acrylamido-2-méthylalcanesulfonique et/ou de son sel.

8. Procédé de traitement des eaux selon la revendication 6 ou 7, dans lequel le copolymère ternaire devant se trouver dans l'agent de traitement de l'eau présente une masse moléculaire moyenne en poids de 500 à 300 000.

9. Procédé de traitement de l'eau selon la revendication 6, dans lequel l'agent de traitement comprend en outre un inhibiteur de corrosion du métal en plus du copolymère ternaire.

10. Procédé de traitement de l'eau selon la revendication 9, dans lequel l'inhibiteur de corrosion du métal comprend au moins un composant choisi parmi le groupe constitué de sels de métaux plurivalents, de phosphonates, d'azoles, de phosphates, de polyphosphates, de phosphonocarboxylates, d'amines et d'esters phosphoriques.
